# FASCICULE DE BREVET EUROPEEN

(11) **EP 3 831 685 B1**
(45) Date de publication et mention de la délivrance du brevet: **10.05.2023**
(21) Numéro de dépôt: 20210955.9
(22) Date de dépôt: 01.12.2020
(51) Int. Cl.: B61D 33/00, B61D 17/10, B60N 2/015

(54) **SIÈGE POUR UN MATÉRIEL FERROVIAIRE ROULANT**
SITZ FÜR SCHIENENFAHRZEUGE
SEAT FOR RAILWAY ROLLING STOCK

(30) Priorité: 02.12.2019 FR 1913589
(43) Date de publication de la demande: 09.06.2021
(73) Titulaire: SNCF Voyageurs, 93200 Saint-Denis (FR)
(72) Inventeur: Dumortier, Robert, 72000 Le Mans (FR); Dumortier, Anne-Laure, 72000 Le Mans (FR)
(74) Mandataire: Fache, Sébastien

(56) Documents cités:
- EP-A1- 0 512 931
- EP-A2- 0 336 844

## Description

### DOMAINE TECHNIQUE

L'invention porte sur un siège, en particulier un siège pour un matériel ferroviaire roulant.

### ART ANTERIEUR ET INCONVENIENTS DE L'ART ANTERIEUR

Les matériels ferroviaires roulants, et en particulier dans les véhicules ferroviaires destinés à transporter des voyageurs, comprennent tous des sièges pour permettre aux usagers de s'asseoir durant leur voyage.

La disposition de ces sièges au sein des voitures du matériel ferroviaire roulant est primordiale. En effet, la fixation des sièges au plancher du matériel ferroviaire ou sol doit garantir la sécurité des usagers. Pour cela, les fixations se doivent d'être robustes pour éviter tout mouvement ou désolidarisation des sièges du plancher du matériel. En outre, la disposition des sièges dans les voitures doit être étudiée pour permettre de loger aisément un nombre maximal de sièges dans le matériel ferroviaire sans pour autant compromettre le confort des usagers.

Il est connu, notamment du document KR 20090015499, une structure de fixation de siège au plancher d'un matériel ferroviaire roulant. Cette structure comprend un rail fixé au plancher du matériel, lequel rail comprend une pluralité de points de fixation dans lesquels des extrémités de bras s'étendant de l'assise de sièges sont logées et vissées. Cette structure permet une installation facile et robuste des sièges sur le rail, et permet également de régler la distance longitudinale entre les sièges.

Cette solution présente néanmoins des inconvénients. En effet, la fixation des sièges est nécessairement réalisée le long du rail sur les points de fixation dont la position est fixe et déterminée. Cela limite donc les possibilités de positionnement des sièges. EP0336844 montre un autre exemple de siège connu de l'art antérieur.

### OBJECTIF DE L'INVENTION

L'invention vise donc à proposer un siège pour un matériel ferroviaire roulant permettant d'augmenter les possibilités de positionnement dudit siège dans le matériel sans compromettre ni la solidité de la fixation du siège au sol ni le confort des usagers.

### EXPOSE DE L'INVENTION

À cet effet, l'invention vise un siège comprenant les caractéristiques techniques de la revendication 1.

Le siège peut également comporter les caractéristiques optionnelles, où la portion de fixation s'étend transversalement au moins sur toute la largeur de l'assise.

L'invention vise également un ensemble d'au moins deux sièges tels que décrits précédemment, les sièges étant disposés alignés de sorte que leurs axes longitudinaux respectifs soient confondus, les portions de fixation en regard de deux sièges adjacents étant reliées entre elles par une plaque qui comporte une face inférieure de fixation prévue pour être solidarisée au sol du matériel et une face supérieure formant revêtement de sol du matériel et disposée dans la continuité des faces supérieures des portions de fixation considérées.

L'invention vise enfin un matériel ferroviaire roulant comprenant au moins un siège tel que décrit précédemment, et/ou au moins un ensemble de sièges tel que décrit précédemment.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue de côté d'un siège selon un premier mode de réalisation, qui ne fait pas partie de l'invention;
[Fig. 2] La figure 2 représente une vue en perspective d'un siège selon un second mode de réalisation, qui ne fait pas partie de l'invention;
[Fig. 3] La figure 3 représente une vue de côté d'un ensemble de deux sièges selon la figure 2 installés dans un matériel ferroviaire roulant ;

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement deux modes de réalisation qui ne font pas partie de l'invention et sont donc présents à titre illustratif, mais qu'il peut exister d'autres modes de réalisation qui répondent à la définition de l'invention.

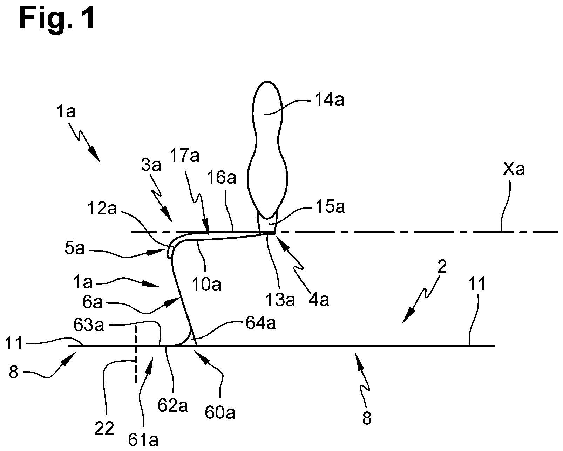

En référence à la figure 1, le siège 1a selon un premier mode de réalisation s'étend selon un axe longitudinal Xa qui est parallèle à un axe antéro-postérieur d'un usager qui occuperait ledit siège 1a. Le siège 1a comprend une assise 3a qui s'étend selon l'axe longitudinal Xa du siège, depuis une partie arrière 4a jusqu'à une partie avant 5a. Par convention dans la suite de la description, la partie avant 5a du siège forme réception de l'arrière des genoux de l'usager occupant le siège 1a. En outre, on définit dans la suite de la description par « face supérieure 16a » la face sur laquelle un usager peut s'assoir, la « face inférieure 10a » de l'assise 3a étant bien entendue la face opposée en regard du sol 8 du matériel ferroviaire 2.

Préférentiellement, la face supérieure 16a de l'assise 3a est adaptée pour s'étendre dans un plan parallèle au sol 8 du matériel ferroviaire roulant 2 dans lequel ledit siège 1a est installé. Avantageusement, l'assise 3a comprend un revêtement différent 17a, par exemple pour des raisons de confort, d'hygiène ou d'esthétique, recouvrant la face supérieure 16a de l'assise 3a.

Le siège 1a comprend en outre un pied 6a qui s'étend depuis et sous l'assise 3a jusqu'à une portion d'extrémité 61a directement solidarisée au sol 8 du matériel ferroviaire roulant 2. Le pied 6a s'étend depuis un bord libre de l'assise 12a, 13a, en particulier depuis le bord avant 12a de l'assise 3a comme cela est représenté sur la figure 1, et en outre s'étend transversalement sur toute la largeur de l'assise 3a.

Selon l'invention, le pied comprend une portion de fixation 61a qui s'étend depuis une partie d'extrémité 60a dudit pied 6a, laquelle portion de fixation 61a est une paroi plane dont une face inférieure 62a est solidarisée au sol 8, par exemple par vissage ou collage, et dont une face supérieure 63a forme revêtement du sol 8 du matériel ferroviaire roulant 2. De manière préférentielle, le siège 1a est réalisé en une pièce unique. En d'autres termes, les usagers peuvent marcher, ou simplement reposer leurs pieds sur la face supérieure 63a de la portion de fixation 61a du pied du siège 1a. En outre et de manière particulièrement avantageuse, la portion de fixation 61a s'étend au moins sur toute la largeur de l'assise 3a, ce qui renforce la solidité de la fixation du siège 1a au sol 8 du matériel ferroviaire 2.

Comme représenté sur la figure 1, le bord libre de la portion de fixation 61a est dans la continuité du reste du revêtement 11 de sol 8. La séparation entre la portion de fixation 61a et le reste du revêtement 11 est représenté par la ligne discontinue 22 sur la figure 1.

Enfin, la partie d'extrémité 60a du pied comprend une surépaisseur 64a qui renforce la rigidité du pied 6a au niveau de ladite partie d'extrémité 60a, laquelle surépaisseur 64a est délimitée par une face supérieure incurvée et par une partie saillante inférieure destinée à être solidarisée au sol 8.

Il n'est donc pas nécessaire de fixer le siège 1a sur le sol 8 du matériel ferroviaire par l'intermédiaire d'un ou plusieurs rails. Le siège 1a peut donc être installé à n'importe quel endroit sur le sol 8 du matériel 2, ce qui permet d'optimiser le nombre de sièges 1a sans compromettre le confort des usagers. En outre, la face supérieure 63a des portions de fixation 61a de siège formant revêtement du sol 8, il n'est pas nécessaire de prévoir un revêtement de sol supplémentaire. Cela facilite les opérations d'installation et de maintenance des sièges 1a, car il n'est pas nécessaire de dégarnir le revêtement de sol afin d'avoir accès aux fixations des sièges 1a au sol 8.

Préférentiellement, l'axe longitudinal Xa du siège 1a installé dans le matériel 2 et l'axe longitudinal dudit matériel 2 sont parallèles entre eux.

De manière avantageuse, les plans sécants dans lesquels s'étendent respectivement le pied 6a et l'assise 3a forment un angle aigu, ce qui a pour effet de renforcer la structure du siège 1a, et donc sa stabilité notamment lorsqu'un usager est assis dessus.

De manière avantageuse, le siège 1a peut comprendre un dossier 14a dont une extrémité de fixation 15a est reliée à l'assise 3a du siège 1a au niveau du bord libre arrière 13a dudit siège 1a, lequel dossier 14a s'étend perpendiculairement à l'axe longitudinal Xa du siège. Le dossier 14a peut en outre comprendre des accessoires connus, comme une tablette et/ou un porte gobelet amovibles (non représentés sur la figure 1).

De manière alternative non représentée, le pied 6a peut s'étendre depuis la partie centrale de l'assise 3a et être moins large que ladite assise, tandis que la portion de fixation dudit pied d'une part s'étend transversalement sur au moins toute la largeur de l'assise 3a et d'autre part s'étend selon l'axe longitudinal Xa du siège 1a en présentant une longueur supérieure à l'assise 3a, de sorte que les bords libres opposés de la portion de fixation dépassent des lignes imaginaires formant les projections sur le sol des deux bords libres avant et arrière de l'assise.

De manière alternative non représentée et correspondant à l'invention, le siège 1a selon le premier mode de réalisation comprend deux pieds respectivement reliés aux bords libres avant 12a et arrière 13a de l'assise 3a. Préférentiellement, chaque pied s'étend transversalement sur toute la largeur de l'assise 3a. Au surplus, les parois planes formant les portions d'extrémité 61a des deux pieds avant et arrière sont au moins aussi larges que l'assise 3a et s'étendent longitudinalement depuis le pied associé en s'éloignant de ladite assise.

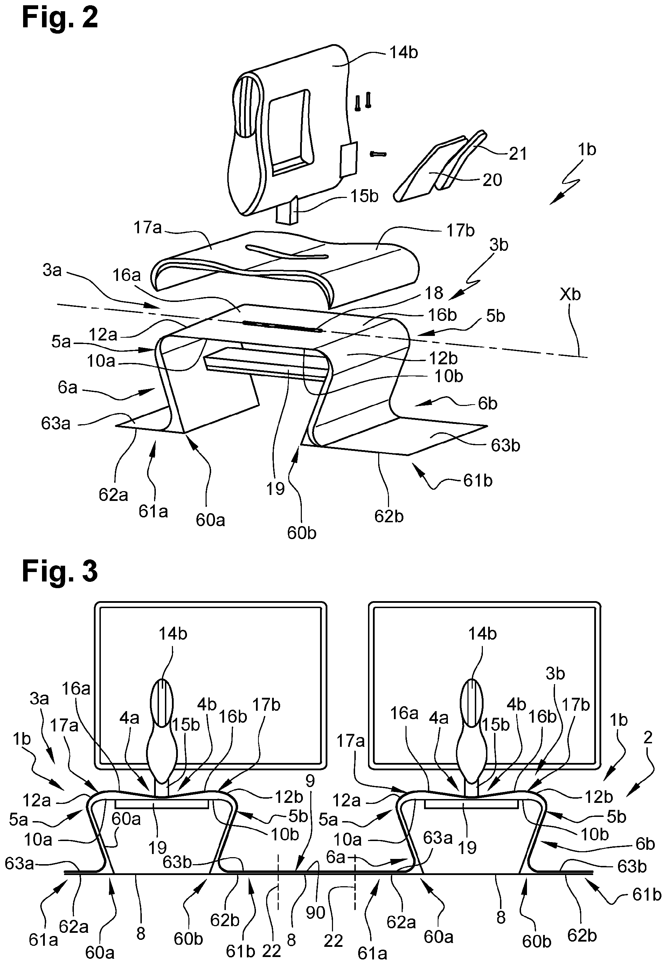

En référence à la figure 2, le siège 1b selon un second mode de réalisation comprend deux assises coplanaires 3a, 3b qui s'étendent selon un axe longitudinal Xb du siège 1b, les assises 3a, 3b étant reliées entre elles par leurs parties arrière 4a, 4b. Le siège 1b est donc adapté pour accueillir deux usagers dos-à-dos, l'axe longitudinal Xb du siège 1b étant parallèle aux axes antéro-postérieur des deux usagers occupant le siège 1b. Avantageusement, les assises 3a, 3b comprennent un revêtement molletonné 17b recouvrant leurs faces supérieures 16a, 16b, conférant un plus grand confort d'assise pour les usagers.

Dans ce mode de réalisation, le siège 1b comprend deux pieds 6a, 6b, respectivement reliés aux bords libres 12a, 12b des parties avant 5a, 5b des assises considérées 3a, 3b. A l'instar du premier mode de réalisation, les pieds 6a, 6b s'étendent selon toute la largeur de l'assise 3a, 3b et les plans sécants dans lesquels s'étendent chaque pied 6a, 6b et les assises 3a, 3b forment un angle aigu pour renforcer la structure du siège 1b. Le siège 1b présente, dans ce second mode de réalisation, un profil en forme d'oméga.

Chaque pied 6a, 6b, qui s'étend transversalement sur toute la largeur de l'assise associée 3a, 3b, comprend une portion de fixation 61a, 61b qui s'étend au moins sur toute la largeur de l'assise 3a, 3b. Ainsi, et à l'instar du siège selon le premier mode de réalisation, les parois planes formant les portions d'extrémité 61a, 61b des deux pieds avant 6a et arrière 6b du siège 1b selon ce second mode de réalisation sont au moins aussi larges que les assises associées 3a, 3b, et chaque portion d'extrémité 61a, 61b s'étend longitudinalement depuis le pied considéré 6a, 6b en s'éloignant de l'assise associée 3a, 3b.

Enfin, le siège 1b selon le second mode de réalisation comprend un dossier 14b relié aux deux assises 3a, 3b au niveau de la jonction entre les parties arrière 4a, 4b desdites assises, lequel dossier 14b s'étend perpendiculairement à l'axe longitudinal Xb du siège 1b. Le dossier 14b comprend en effet une extrémité de fixation 15b adaptée pour traverser une lumière 18 ménagée dans les deux assises 3a, 3b et s'emboiter dans un organe coopérant 19 disposé sous les assises 3a, 3b en regard des faces inférieures 10a, 10b desdites assises 3a, 3b. Cet organe coopérant 19, qui est par exemple une planche solidarisée à la face inférieure 10a, 10b de l'assise 3a, 3b, fait ainsi partie intégrante de ladite assise 3a, 3b. En outre, la largeur de cette planche 19 est inférieure à la largeur de ladite assise 3a, 3b.

Le dossier 14b peut en outre comprendre des accessoires connus, comme une tablette 20 et/ou un porte gobelet 21 amovibles.

En référence à la figure 3, le matériel ferroviaire comprend un ensemble de sièges 1b agencés selon au moins une rangée longitudinale, préférentiellement deux ensembles de sièges 1b agencés selon deux rangées longitudinales séparées par une allée centrale du matériel ferroviaire 2.

Les sièges 1b de l'ensemble sont régulièrement espacés, d'une distance permettant de loger un nombre optimal de sièges 1b sans sacrifier le confort des usagers. De manière avantageuse, afin de combler l'espace au sol entre deux sièges adjacents 1b, l'ensemble de sièges comprend une pluralité de plaques 9 d'épaisseur égale à celle des parois planes formant les portions de fixation 61a, 61b des sièges associés 1b. Chaque plaque 9 est disposée pour relier entre elles les portions de fixation 61a, 61b en vis-à-vis de sièges adjacents. Ainsi, les bords libres opposés de la plaque considérée 9 sont respectivement au contact des bords libres respectifs des deux portions de fixation 61a, 61b en regard des sièges adjacents considérés. Sur la figure 3, la séparation entre la plaque 9 et les bords libres des portions de fixation 61a, 61b est symbolisée par des lignes verticales discontinues 22.

Chaque plaque 9 comprend en outre une face inférieure solidarisée au sol 8 du véhicule, et une face supérieure 90 formant revêtement de sol 8 du matériel ferroviaire roulant 2. Bien entendu, les faces supérieures 90 des plaques 9 de l'ensemble de sièges 1b et les faces supérieures 63a, 63b de toutes les portions de fixation 61a, 61b des sièges 1b de l'ensemble sont toutes au même niveau pour former un revêtement de sol continu.

## Revendications

1. Siège (1a, 1b) pour matériel ferroviaire roulant (2) s'étendant selon un axe longitudinal (Xa, Xb) parallèle à un axe antéro-postérieur d'un usager occupant ledit siège (1a, 1b), comprenant au moins une assise (3a, 3b) s'étendant longitudinalement depuis une partie arrière (4a) vers une partie avant (5a) formant réception de l'arrière des genoux de l'usager, et au moins un pied (6a, 6b) s'étendant depuis et sous l'assise (3a, 3b), et dont le pied (6a, 6b) comprend une portion de fixation (61a, 61b) s'étendant depuis une partie d'extrémité du pied (60a, 60b), laquelle portion de fixation (61a, 61b) comprend au moins une paroi plane qui comporte une face inférieure de fixation (62a, 62b) prévue pour être solidarisée à un sol (8) du matériel et une face supérieure (63a, 63b) formant revêtement de sol (8) du matériel (2) **caractérisé en ce que** ledit siège (1a) comprend deux pieds (6a) respectivement solidaires du bord libre (13a) de la partie arrière (4a) de l'assise (3a) et du bord libre (12a) de la partie avant (5a) de l'assise (3a), la face supérieure (63a) de la portion de fixation (61a) de chaque pied (6a) formant revêtement pour le sol (8).

2. Siège (1a, 1b) selon la revendication précédente, **caractérisé en ce que** la portion de fixation (61a, 61b) s'étend transversalement au moins sur toute la largeur de l'assise (3a, 3b).

3. Ensemble d'au moins deux sièges (1a, 1b) selon l'une quelconque des revendications précédentes, les sièges étant disposés alignés de sorte que leurs axes longitudinaux respectifs (Xa, Xb) soient confondus, **caractérisé en ce que** les portions de fixation (61a, 61b) en regard de deux sièges adjacents (1a, 1b) sont reliées entre elles par une plaque (9) qui comporte une face inférieure de fixation prévue pour être solidarisée au sol (8) du matériel (2) et une face supérieure (90) formant revêtement de sol (8) du matériel (2) et disposée dans la continuité des faces supérieures (63a, 63b) des portions de fixation considérées (61a, 61b).

4. Matériel ferroviaire roulant (2) comprenant au moins un siège (1a, 1b) selon l'une quelconque des revendications 1 à 2, et/ou au moins un ensemble de sièges (1a, 1b) selon la revendication 3.

## Patentansprüche

1. Sitz (1a, 1b) für Schienenfahrzeuge (2), der sich entlang einer Längsachse (Xa, Xb) parallel zu einer von vorne nach hinten gehenden Achse eines Benutzers des Sitzes (1a, 1b) erstreckt, umfassend mindestens eine Sitzfläche (3a, 3b), die sich in Längsrichtung von einem hinteren Teil (4a) zu einem vorderen Teil (5a) hin erstreckt, der die Aufnahme für die Rückseite der Knie des Benutzers bildet, und mindestens einen Fuß (6a, 6b), der sich von und unter der Sitzfläche (3a, 3b) erstreckt, und wobei der Fuß (6a, 6b) einen Befestigungsabschnitt (61a, 61b) umfasst, der sich von einem Endteil des Fußes (60a, 60b) erstreckt, wobei der Befestigungsabschnitt (61a, 61b) mindestens eine ebene Wand umfasst, die eine untere Befestigungsfläche (62a, 62b), die dazu vorgesehen ist, fest mit einem Fußboden (8) der Schienenfahrzeuge (2) verbunden zu werden, und eine obere Fläche (63a, 63b) umfasst, die den Belag des Fußbodens (8) der Schienenfahrzeuge (2) bildet, **dadurch gekennzeichnet, dass** der Sitz (1a) zwei Füße (6a) umfasst, die jeweils fest mit dem freien Rand (13a) des hinteren Teils (4a) der Sitzfläche (3a) und dem freien Rand (12a) des vorderen Teils (5a) der Sitzfläche (3a) verbunden sind, wobei die obere Fläche (63a) des Befestigungsabschnitts (61a) jedes Fußes (6a) einen Belag für den Fußboden (8) bildet.

2. Sitz (1a, 1b) nach dem vorhergehenden Anspruch, **dadurch gekennzeichnet, dass** sich der Befestigungsabschnitt (61a, 61b) quer mindestens über die gesamte Breite der Sitzfläche (3a, 3b) erstreckt.

3. Baugruppe von mindestens zwei Sitzen (1a, 1b) nach einem der vorhergehenden Ansprüche, wobei die Sitze ausgerichtet angeordnet sind, so dass ihre jeweiligen Längsachsen (Xa, Xb) zusammenfallen, **dadurch gekennzeichnet, dass** die gegenüberliegenden Befestigungsabschnitte (61a, 61b) von zwei benachbarten Sitzen (1a, 1b) durch eine Platte (9) miteinander verbunden sind, die eine untere Befestigungfläche, die dazu vorgesehen ist, fest mit dem Fußboden (8) der Schienenfahrzeuge (2) verbunden zu werden, und eine obere Fläche (90) aufweist, die den Belag des Fußbodens (8) der Schienenfahrzeuge (2) bildet und in der Fortsetzung der oberen Flächen (63a, 63b) der betreffenden Befestigungsabschnitte (61a, 61b) angeordnet ist.

4. Schienenfahrzeuge (2), umfassend mindestens einen Sitz (1a, 1b) nach einem der Ansprüche 1 bis 2 und/oder mindestens eine Baugruppe von Sitzen (1a, 1b) nach Anspruch 3.

## Claims

1. Seat (1a, 1b) for railway rolling stock (2) extending along a longitudinal axis (Xa, Xb) parallel to an antero-posterior axis of a user occupying said seat (1a, 1b), comprising at least one seating portion (3a, 3b) extending longitudinally from a rear part (4a) to a front part (5a) forming a reception for the back of the user's knees, and at least one foot (6a, 6b) extending from and beneath the seating portion (3a, 3b), said foot (6a, 6b) comprising a fixing portion (61a, 61b) extending from an end part of the foot (60a, 60b), which fixing portion (61a, 61b) comprises at least one planar wall which has a lower fixing face (62a, 62b) intended to be secured to a floor (8) of the rolling stock (2) and an upper face (63a, 63b) forming a covering for the floor (8) of the rolling stock (2), wherein said seat (1a) comprises two feed (6a) that are respectively secured to the free edge (13a) of the rear part (4a) of the seating portion (3a) and to the free edge (12a) of the front part (5a) of the seating portion (3a), the upper face (63a) of the fixing portion (61a) of each foot (6a) forming a covering for the floor (8).

2. Seat (1a, 1b) according to the preceding claim, wherein the fixing portion (61a, 61b) extends transversely at least across the entire width of the seating portion (3a, 3b).

3. Assembly of at least two seats (1a, 1b) according to either one of the preceding claims, the seats being disposed in an aligned manner such that their respective longitudinal axes (Xa, Xb) coincide, wherein the facing fixing portions (61a, 61b) of two adjacent seats (1a, 1b) are connected together by a plate (9) which has a lower fixing face intended to be secured to the floor (8) of the rolling stock (2) and an upper face (90) that forms a covering for the floor (8) of the rolling stock (2) and is disposed in the continuation of the upper faces (63a, 63b) of the fixing portions (61a, 61b) in question.

4. Railway rolling stock (2) comprising at least one seat (1a, 1b) according to either one of Claims 1 and 2 and/or at least one assembly of seats (1a, 1b) according to Claim 3.
